# EUROPEAN PATENT SPECIFICATION

(11) **EP 3 852 595 B1**
(45) Date of publication and mention of the grant of the patent: **10.05.2023**
(21) Application number: 19748809.1
(22) Date of filing: 31.07.2019
(51) Int. Cl.: A47L 15/00, A47L 15/42, D06F 39/00

(54) **A DISHWASHER COMPRISING A HEAT PUMP**
GESCHIRRSPÜLER MIT EINER WÄRMEPUMPE
LAVE-VAISSELLE COMPRENANT UNE POMPE À CHALEUR

(30) Priority: 21.09.2018 TR 201813659
(43) Date of publication of application: 28.07.2021
(73) Proprietor: Arçelik Anonim Sirketi, 34445 Istanbul (TR)
(72) Inventor: KUTUK, Erkan, 34950 ISTANBUL (TR); BAYRAKTAR, Songul, 34950 ISTANBUL (TR); KAN, Ugur, 34950 ISTANBUL (TR); POYRAZ, Onur, 34950 ISTANBUL (TR); SAGLICAN, Emre, 34950 ISTANBUL (TR)
(86) International application number: PCT/EP2019/070619
(87) International publication number: WO 2020/057833

(56) References cited:
- WO-A1-2009/004019
- WO-A1-2009/004037
- WO-A1-2016/177718
- DE-A1- 4 238 450

## Description

The present invention relates to a dishwasher comprising a heat pump.

In dishwashers, heat pumps are used for decreasing the energy consumption and improve the drying performance. In heat pump dishwashers, the heat pump is composed of the compressor, the first heat exchanger, the throttle valve and the second heat exchanger. The components of the heat pump are connected via a pipe line and the heat pump operates by means of the cycle fluid in the line. The second heat exchanger is a tube bundle having a hot surface and enables the water to be heated by being positioned in the washing liquid of the dishwasher. The first heat exchanger has a cold surface and is positioned so as to contact the ambient air. The first heat exchanger draws heat from the environment and transfers the heat to the compressor and the second heat exchanger. In this type of heat pump systems, for heating the water, the compressor is operated to enable the second heat exchanger to heat the water, and the first heat exchanger is enabled to absorb heat from the environment to support the second heat exchanger which heats the water. During the drying process and while the second heat exchanger is operated to heat the washing water, hot and dry air is passed through the washing tub wherein the articles to be washed are placed. Humid air leaving the washing tub leaves its moisture while passing over the first heat exchanger which works as the condenser and warms while passing over the second heat exchanger which works as the heater. The air which heats up with the removal of its moisture is sent into the tub throughout the drying cycle. The humid air condensing on the fins of the first heat exchanger trickles down as water droplets with the effect of the gravity and said droplets accumulate in the lower water collection chamber under the first heat exchanger.

In dishwashers, water softening systems are used for decreasing the hardness of the washing water and for providing an effective washing. The water softening system comprises an ion exchanger and a salt container wherein the salt used in the regeneration process of the resin inside the ion exchanger is kept. In order to decrease the hardness of the water, the water received from the mains is passed through the ion exchanger and is delivered to the washing tub to be used in the washing process. The resin in the ion exchanger becomes saturated with hard elements at the end of a certain number of washing processes and cannot carry out its function. Therefore, by means of the salt water solution formed by using the additional water taken into the water softening unit and the salt in the salt container, the resin is regenerated. However, taking additional water into the machine for the regeneration process increases water consumption.

The salt container used for regenerating the resin in the ion exchanger at certain intervals must have a certain size, thus the salt container occupies much space in the machine.

In the state of the art Patent Application Document No. WO2014198300, a washer is disclosed, wherein the water taken from the mains is regenerated with the waste water and heat generated at the end of the washing process so as to be used in the next washing process, thus providing energy efficiency.

In the state of the art Patent Application Document No. WO2016177718 A1, a dishwasher is disclosed, comprising a heat pump with a water collection tank.

The aim of the present invention is the realization of a dishwasher comprising a salt container which provides the required regeneration process without increasing the dimensions thereof.

The dishwasher realized in order to attain the aim of the present invention, explicated in the first claim and the respective claims thereof comprises a body; a washing tub which is disposed in the body and wherein the washing process is performed with the taken from the mains line; a heat pump which is disposed under the washing tub and which has a first heat exchanger for drawing heat from the environment to heat the water to be used in the washing step, a second heat exchanger for transferring the heat received from the first heat exchanger to the washing water, and a compressor which is in fluid connection with the first heat exchanger and the second heat exchanger and which provides the refrigerant cycle; a water collection receptacle which is disposed under the first heat exchanger and wherein the water formed with the condensation of water vapor on the surface of the first heat exchanger is collected; and a water softening unit which enables the water taken from the mains line to be softened to be used in the washing process and which has an ion exchanger having resin therein and a salt container for regenerating the resin at certain intervals. While heating the washing water, the heat of the ambient air is used as heat source, and the heat in the ambient air taken into the machine by means of the fan is drawn by the heat pump. When the air taken into the machine contacts the surface of the first heat exchanger, the water vapor in the ambient air condenses and changes to liquid phase due to the temperature difference between the ambient air and the first heat exchanger so as to be accumulated in the water collection receptacle disposed under the first heat exchanger.

The dishwasher comprises a first liquid delivery line with one end connected to the mains line and the other end to the water collection receptacle; a second liquid delivery line with one connected to the water collection receptacle and the other to the water softening unit; and a control unit which provides the delivery of the water taken from the mains line to the water collection receptacle via the first liquid delivery line and which enables the water condensing on the first heat exchanger and the water taken from the mains line to be mixed in the water collection receptacle and then delivered to the water softening unit via the second liquid delivery line. The water softening unit is enabled to receive water with few hard elements. By means of the resin provided in the ion exchanger, the water entering the water softening unit is separated from hard elements and made ready for use in the washing step. Moreover, the resin is used for a higher number of washing processes without being regenerated. By means of the control unit, the water, which is delivered to the water collection receptacle to be partially cleansed of hard elements, is delivered to the water softening unit to be made ready for the washing process.

In an embodiment of the present invention, after the water is once cleansed of hard elements by means of the resin in the ion exchanger, the resin is required to be regenerated to function. By generating salt water solution with the salt in the salt container and the water formed with the condensation of water vapor on the surface of the first heat exchanger which is delivered to the water softening unit via the first liquid delivery time, the regeneration of the resin is realized without taking additional water into the machine.

By delivering to the water softening unit the mixture of the water taken from the mains line with the water in the water collection receptacle, a higher number of washing processes are performed without regenerating the resin in the ion exchanger. Consequently, the need for increasing the size of the salt container which contains the salt required for regenerating the resin is eliminated. By delivering into the water softening unit the water mixture which has fewer hard elements compared to the water taken from the mains line and by decreasing the frequency of regenerating the resin, the amount of water required for the regeneration of the resin decreases, thus providing energy efficiency based on the decreasing water consumption. In another embodiment of the present invention, the dishwasher comprises a pump which is connected to the water collection receptacle and the water softening unit and which enables the water in the water collection receptacle to be delivered to the water softening unit. By means of the control unit, the delivery of the water required for the regeneration of the resin to the water softening unit is controlled by means of the pump without taking additional water from the mains line. Consequently, water consumption is decreased, providing energy efficiency.

In another embodiment of the present invention, the dishwasher comprises a heater which is disposed into the water collection receptacle and which heats the water to be delivered to the water softening unit to be used for regenerating the resin when water is not taken from the mains line. By means of the heater, the water collected in the water collection receptacle is heated and delivered to the water softening unit. By means of the hot water delivered to the water softening unit, the effectiveness of the regeneration of the resin is improved.

In another embodiment of the present invention, the heat pump increases the amount of water collected in the water collection receptacle by condensing on the first heat exchanger which can be operated as per user preference when the washing and drying processes are not performed. By keeping the first heat exchanger active for a longer time, more air is passed thereover, and the amount of water condensing is increased. The water required for partially cleansing the mains water of hard elements and for the salt water solution to be formed in the regeneration of the resin by being delivered to the water softening unit is collected in the water collection receptacle quicker.

In another embodiment of the present invention, the dishwasher comprises a fan which directs the humid air generated in the drying step onto the first heat exchanger. By delivering the humid air onto the first heat exchanger by means of the fan, the amount of water condensing is increased due to the temperature difference between the humid air and the first heat exchanger. Thus, the amount of water which is collected in the water collection receptacle to be made ready for the washing process by being delivered to the water softening unit and which is required for the regeneration of the resin in the ion exchanger is collected quicker.

In another embodiment of the present invention, the first heat exchanger is coated with non-conducting material suitable for increasing the amount of water which condenses due to the temperature difference between the humid air passed over the first heat exchanger and the surface thereof and which trickles down into the water collection receptacle with the effect of gravity. By means of the non-conduction material, the amount of water which condenses on the first heat exchanger and trickles down into the water collection receptacle is increased. Thus, the amount of water which is delivered from the water collection receptacle to the water softening unit via the second liquid delivery line to be made ready for the washing process and which is required for the regeneration of the resin is collected quicker.

A dishwasher realized in order to attain the aim of the present invention is illustrated in the attached figures, where:

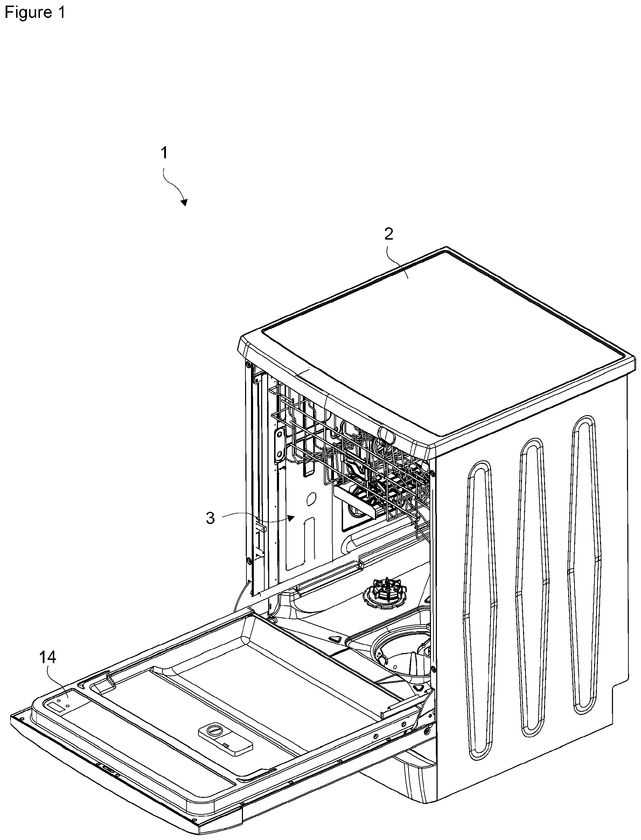

- Figure 1 -: is the front perspective view of the dishwasher.

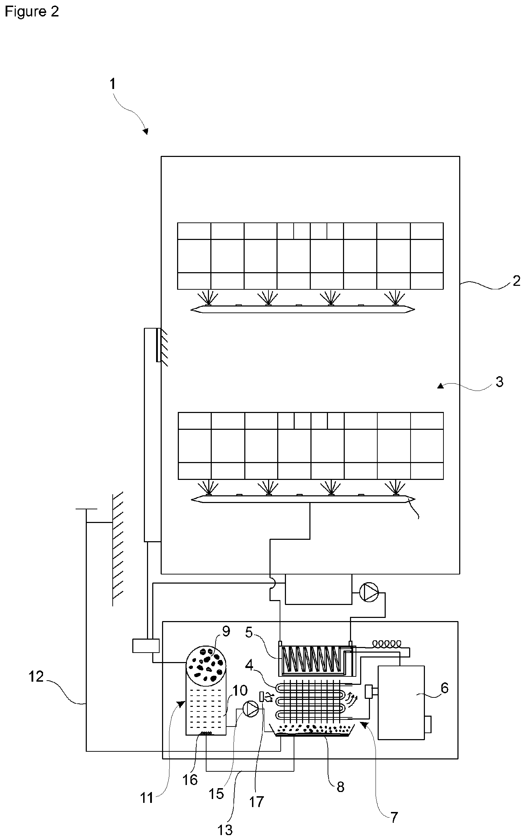

- Figure 2 -: is the schematic view of the dishwasher comprising a water softening unit and a heat pump.

The elements illustrated in the figures are numbered as follows:
- 1-: Dishwasher
- 2-: Body
- 3-: Washing tub
- 4-: First heat exchanger
- 5-: Second heat exchanger
- 6-: Compressor
- 7-: Heat pump
- 8-: Water collection receptacle
- 9-: Ion exchanger
- 10-: Salt container
- 11-: Water softening unit
- 12-: First liquid delivery line
- 13-: Second liquid delivery line
- 14-: Control unit
- 15-: Pump
- 16-: Heater
- 17-: Fan

The dishwasher (1) comprises a body (2); a washing tub (3) which is disposed in the body (2) and wherein the washing process is performed with the taken from the mains line; a heat pump (7) which is disposed under the washing tub (3) and which has a first heat exchanger (4) for drawing heat from the environment to heat the water to be used in the washing step, a second heat exchanger (5) for transferring the heat received from the first heat exchanger (4) to the washing water, and a compressor (6) which is in fluid connection with the first heat exchanger (4) and the second heat exchanger (5) and which provides the refrigerant cycle; a water collection receptacle (8) which is disposed under the first heat exchanger (4) and wherein the water formed with the condensation of water vapor on the surface of the first heat exchanger (4) is collected; and a water softening unit (11) which enables the water taken from the mains line to be softened to be used in the washing process and which has an ion exchanger (9) having resin therein and a salt container (10) for regenerating the resin. By using the water cleansed of hard elements by means of the water softening unit (11) in the washing step, formation of scratches and lime on the dishes to be washed is prevented. The resin in the ion exchanger (9) becomes saturated with hard elements after a certain number of washing processes and cannot carry out its function. Therefore, by means of the salt water solution formed by using water and the salt in the salt container (10), the resin is regenerated.

The dishwasher (1) of the present invention comprises a first liquid delivery line (12) with one end connected to the mains line and the other end to the water collection receptacle (8); a second liquid delivery line (13) with one connected to the water collection receptacle (8) and the other to the water softening unit (11); and a control unit (14) which provides the delivery of the water taken from the mains line to the water collection receptacle (8) via the first liquid delivery line (12) and which enables the water condensing on the first heat exchanger (4) and the water taken from the mains line to be mixed in the water collection receptacle (8) and then delivered to the water softening unit (11) via the second liquid delivery line (13). By delivering the water taken from the mains line to the water collection receptacle (8) via the first liquid delivery line (12) and mixing the same therein with the condensed water vapor, the mains water is partially cleansed of hard elements. The water which is mixed with the water in the water collection receptacle (8) and partially cleansed of hard elements is delivered to the water softening unit (11) via the second liquid delivery line (13). As the water delivered to the water softening unit (11) contains fewer hard elements compared to the mains water, the water required for the washing process is made ready for use quicker. Thus, the resin in the ion exchanger (9) disposed in the water softening unit (11) is saturated in terms of hard elements and requires to be regenerated after a higher number of washing processes. As a higher number of washing processes can be performed without regenerating the resin, the frequency of taking additional water to form salt water solution is decreased, thus reducing water consumption and increasing energy efficiency. Moreover, as the frequency of the regeneration process is decreased, the need for increasing the size of the salt container (10) which contains the salt is eliminated.

In an embodiment of the present invention, the control unit (14) enables the water collected in the water collection receptacle (8) to be delivered to the water softening unit (11) so as to regenerate the resin in the ion exchanger (9) when water is not taken from the mains line. The resin in the ion exchanger (9) becomes saturated with hard elements after a certain number of washing processes and requires to be regenerated. By taking additional water for the regeneration process, salt water solution is formed with the salt in the salt container (10). When water is not taken from the mains line, the control unit (14) enables the water required for the salt water solution required for regenerating the resin to be taken from the water collected in the water collection receptacle (8) and delivered to the water softening unit (11). Thus, the need for taking additional water for regenerating the resin is eliminated.

In another embodiment of the present invention, the dishwasher (1) comprises a pump (15) which is disposed between the water collection receptacle (8) and the water softening unit (11) and which enables the water in the water collection receptacle (8) to be delivered to the water softening unit (11), and the control unit (14) which controls the pump (15). The control unit (14) enables the water required for the regeneration of the resin to be delivered to the water softening unit (11) by means of the pump (15) without taking additional water from the mains line.

In another embodiment of the present invention, the dishwasher (1) comprises a heater (16) which is disposed into the water collection receptacle (8) and which heats the water to be used for regenerating the resin. When water is not taken from the mains line, the water collected in the water collection receptacle (8) is heated and then delivered to the water softening unit (11). Thus, the effectiveness of the regeneration of the resin is increased.

In another embodiment of the present invention, the first heat exchanger (4) can be operated as per user preference. The first heat exchanger (4) can be operated when the dishwasher (1) does not carry out washing and drying processes. By increasing the time the first heat exchanger (4) remains active, the amount of water passing thereover to be condensed and collected in the water collection receptacle (8) is increased. Thus, the water delivered to the water softening unit (11) and cleansed of hard elements to be made ready for the washing process is enabled to be made ready quicker. Consequently, the amount of water required for regenerating the resin in the ion exchanger (9) disposed in the water softening unit (11) is enabled to be collected in the water collection receptacle (8) quicker.

In another embodiment of the present invention, the dishwasher (1) comprises a fan (17) which is disposed on the heat pump (7) and which directs the humid air generated in the drying step onto the first heat exchanger (4). The humid air is delivered onto the first heat exchanger (4) by means of the fan (17). The temperature of the humid air is different from the temperature of the first heat exchanger (4). The amount of water vapor condensing increases due to said temperature difference. Thus, with the amount of water which is collected in the water collection receptacle (8) to be made ready for the washing process by being delivered to the water softening unit (11), the amount of water required for the regeneration of the resin in the ion exchanger is obtained.

In another embodiment of the present invention, the first heat exchanger (4) is coated with a non-conducting material. By means of the non-conducting material, the temperature difference between the humid air passed over the first heat exchanger (4) and the surface thereof increases. Thus, the amount of water condensing and trickling down into the water collection receptacle (8) with the effect of gravity increases. With the water which is delivered from the water collection receptacle (8) to the water softening unit (11) to be cleansed of hard elements so as to be ready for the washing process, the amount of water required for regenerating the resin is obtained quicker.

By means of the present invention, a dishwasher (1) is realized, wherein the frequency of regenerating the resin is decreased without increasing the size of the salt container (10).

## Claims

1. A dishwasher (1) **comprising** a body (2); a washing tub (3) which is disposed in the body (2) and wherein a washing process is performed with water taken from the mains line; a heat pump (7) which is disposed under the washing tub (3) and which has a first heat exchanger (4) for drawing heat from the environment to heat the water to be used in the washing step, a second heat exchanger (5) for transferring the heat received from the first heat exchanger (4) to the washing water, and a compressor (6) which is in fluid connection with the first heat exchanger (4) and the second heat exchanger (5) and which provides the refrigerant cycle; a water collection receptacle (8) which is disposed under the first heat exchanger (4) and wherein the water formed with the condensation of water vapor on the surface of the first heat exchanger (4) is collected; and a water softening unit (11) which enables the water taken from the mains line to be softened to be used in the washing process and which has an ion exchanger (9) having resin therein and a salt container (10) for regenerating the resin, **characterized by** further comprising a first liquid delivery line (12) with one end connected to the mains line and the other end to the water collection receptacle (8); a second liquid delivery line (13) with one connected to the water collection receptacle (8) and the other to the water softening unit (11); and a control unit (14) which provides the delivery of the water taken from the mains line to the water collection receptacle (8) via the first liquid delivery line (12) and which enables the water condensing on the first heat exchanger (4) and the water taken from the mains line to be mixed in the water collection receptacle (8) and then delivered to the water softening unit (11) via the second liquid delivery line (13).

2. A dishwasher (1) as in Claim 1, **characterized by** the control unit (14) which enables the water collected in the water collection receptacle (8) to be delivered to the water softening unit (11) so as to regenerate the resin in the ion exchanger (9).

3. A dishwasher (1) as in any one of the above claims, **characterized by** further comprising a pump (15) which is disposed between the water collection receptacle (8) and the water softening unit (11) and which enables the water in the water collection receptacle (8) to be delivered to the water softening unit (11), and by the control unit (14) which controls the pump (15).

4. A dishwasher (1) as in any one of the above claims, **characterized by** further comprising a heater (16) which is disposed into the water collection receptacle (8) and which is configured to heat the water to be used for regenerating the resin.

5. A dishwasher (1) as in any one of the above claims, **characterized by** the first heat exchanger (4) which can be operated as per user preference.

6. A dishwasher (1) as in any one of the above claims, **characterized by** further comprising a fan (17) which is disposed on the heat pump (7) and which is configured to direct the humid air generated in the drying step onto the first heat exchanger (4).

7. A dishwasher (1) as in any one of the above claims, **characterized by** the first heat exchanger (4) which is coated with a non-conducting material.

## Patentansprüche

1. Ein Geschirrspüler (1) umfasst einen Körper (2); eine Waschwanne (3), die in dem Körper (2) angeordnet ist und in der ein Waschvorgang mit Entnahme aus der Hauptleitung durchgeführt wird; eine unter der Waschwanne (3) angeordnete Wärmepumpe (7) mit einem ersten Wärmetauscher (4) zum Entziehen von Wärme aus der Umgebung zum Erwärmen des im Waschschritt zu verwendenden Wassers, einen zweiten Wärmetauscher (5) zum Übertragen der vom ersten Wärmetauscher (4) empfangenen Wärme auf das Waschwasser, und einen Kompressor (6), der in Fluidverbindung mit dem ersten Wärmetauscher (4) und dem zweiten Wärmetauscher (5) steht und der den Kältemittelkreislauf bereitstellt; einen Wassersammelbehälter (8), der unter dem ersten Wärmetauscher (4) angeordnet ist und in dem das bei der Kondensation von Wasserdampf auf der Oberfläche des ersten Wärmetauschers (4) gebildete Wasser gesammelt wird; und eine Wasserenthärtungseinheit (11), die es ermöglicht, das aus der Hauptleitung entnommene Wasser zu enthärten, um es im Waschprozess zu verwenden, und die einen Ionenaustauscher (9) mit Harz darin und einen Salzbehälter (10) zum Regenerieren des Harzes aufweist, gekennzeichnet ist es dadurch, dass er darüber hinaus eine erste Flüssigkeitszufuhrleitung (12) umfasst, dessen ein Ende mit der Hauptleitung und das andere Ende mit dem Wassersammelbehälter (8) verbunden ist; eine zweite Flüssigkeitszufuhrleitung (13), von der eine mit dem Wassersammelbehälter (8) und die andere mit der Wasserenthärtungseinheit (11) verbunden ist; und eine Steuereinheit (14), die die Zuführung des aus der Hauptleitung entnommenen Wassers zum Wassersammelbehälter (8) über die erste Flüssigkeitszuführleitung (12) vorsieht, der es ermöglicht, das am ersten Wärmetauscher (4) kondensierende Wasser und das aus der Hauptleitung entnommene Wasser im Wassersammelbehälter (8) zu mischen und dann über die zweite Flüssigkeitszuleitung (13) der Wasserenthärtungsanlage (11) zuzuführen.

2. Ein Geschirrspüler (1), wie in Anspruch 1 aufgeführt, **ist dadurch gekennzeichnet, dass** die Steuereinheit (14) ermöglicht, dass das im Wassersammelbehälter (8) gesammelte Wasser der Wasserenthärtungseinheit (11) zugeführt wird, um das Harz im Ionenaustauscher (9) zu regenerieren.

3. Ein Geschirrspüler (1), wie in einem der vorherigen Ansprüchen aufgeführt, **ist dadurch gekennzeichnet, dass** es ferner eine Pumpe (15) umfasst, die zwischen dem Wassersammelbehälter (8) und der Wasserenthärtungseinheit (11) und die es ermöglicht, das Wasser im Wassersammelbehälter (8) der Wasserenthärtungseinheit (11) zuzuführen, und durch die Steuereinheit (14), die die Pumpe (15) steuert.

4. Ein Geschirrspüler (1), wie in einem der vorherigen Ansprüchen aufgeführt, **ist dadurch gekennzeichnet, dass** es ferner einen Heizer (16) umfasst, der in dem Wassersammelbehälter (8) angeordnet ist und der konfiguriert ist, um das zum Regenerieren des Harzes zu verwendende Wasser zu erhitzen.

5. Ein Geschirrspüler (1), wie in einem der vorherigen Ansprüchen aufgeführt, **ist dadurch gekennzeichnet, dass** der erste Wärmetauscher (4) nach Benutzerpräferenz betrieben werden kann.

6. Ein Geschirrspüler (1), wie in einem der vorherigen Ansprüchen aufgeführt, **ist dadurch gekennzeichnet, dass** es ferner einen Ventilator (17) umfasst, der an der Wärmepumpe (7) angeordnet ist und dazu konfiguriert ist, die im Trocknungsschritt erzeugte feuchte Luft auf den ersten Wärmetauscher (4) zu leiten.

7. Ein Geschirrspüler (1), wie in einem der vorherigen Ansprüchen aufgeführt, **ist dadurch gekennzeichnet, dass** der erste Wärmetauscher (4) mit einem nicht leitenden Material beschichtet ist.

## Revendications

1. Un lave-vaisselle (1) **comprenant** un corps (2) ; une baignoire de lavage (3) qui est disposée dans le corps (2) et dans laquelle un processus de lavage est effectué avec de l'eau prélevée sur le réseau électrique ; une pompe à chaleur (7) qui est disposée sous la cuve de lavage (3) et qui comporte un premier échangeur de chaleur (4) pour extraire de la chaleur de l'environnement afin de chauffer l'eau à utiliser dans l'étape de lavage, un second échangeur de chaleur (5) pour transférer la chaleur reçue du premier échangeur de chaleur (4) à l'eau de lavage, et un compresseur (6) qui est en liaison fluidique avec le premier échangeur de chaleur (4) et le second échangeur de chaleur (5) et qui fournit le cycle réfrigérant; un réceptacle de collecte d'eau (8) qui est disposé sous le premier échangeur de chaleur (4) et dans lequel est collectée l'eau formée par la condensation de la vapeur d'eau sur la surface du premier échangeur de chaleur (4) ; et une unité d'adoucissement de l'eau (11) qui permet à l'eau prélevée dans la conduite principale d'être adoucie pour être utilisée dans le processus de lavage et qui comporte un échangeur d'ions (9) contenant une résine et un réservoir de sel (10) pour régénérer la résine, **caractérisée parle** fait qu'elle comprend en outre une première conduite d'alimentation en liquide (12) dont une extrémité est reliée à la conduite principale et l'autre extrémité au réceptacle de collecte d'eau (8) une deuxième ligne d'alimentation en liquide (13) dont l'une est reliée au récipient de collecte d'eau (8) et l'autre à l'unité d'adoucissement d'eau (11) ; et une unité de commande (14) qui assure l'alimentation de l'eau prélevée sur la ligne principale vers le récipient de collecte d'eau (8) via la première ligne d'alimentation en liquide (12) et qui permet à l'eau se condensant sur le premier échangeur de chaleur (4) et à l'eau prélevée sur la ligne principale d'être mélangées dans le récipient de collecte d'eau (8) et ensuite d'être alimentées vers l'unité d'adoucissement d'eau (11) via la deuxième ligne d'alimentation en liquide (13).

2. Un lave-vaisselle (1) comme dans la déclaration 1, **caractérisé par** l'unité de commande (14) qui permet à l'eau collectée dans le réceptacle de collecte d'eau (8) d'être délivrée à l'unité d'adoucissement d'eau (11) de façon à régénérer la résine dans l'échangeur d'ions (9).

3. Un lave-vaisselle (1) comme dans l'une quelconque des déclarations précédentes, **caractérisé par le fait qu'**il comprend en outre une pompe (15) qui est disposée entre le réceptacle de collecte d'eau (8) et l'unité d'adoucissement d'eau (11) et qui permet à l'eau dans le réceptacle de collecte d'eau (8) d'être délivrée à l'unité d'adoucissement d'eau (11), et par l'unité de commande (14) qui commande la pompe (15).

4. Un lave-vaisselle (1) comme dans l'une quelconque des déclarations ci-dessus, **caractérisé par** le fait de comprendre en outre un dispositif de chauffage (16) qui est disposé dans le réceptacle de collecte d'eau (8) et qui est configuré pour chauffer l'eau à utiliser pour régénérer la résine.

5. Un lave-vaisselle (1) comme dans l'une quelconque des déclarations ci-dessus, **caractérisé par** le premier échangeur de chaleur (4) qui peut être actionné selon les préférences de l'utilisateur.

6. Un lave-vaisselle (1) comme dans l'une quelconque des déclarations ci-dessus, **caractérisé par** le fait de comprendre en outre un ventilateur (17) qui est disposé sur la pompe à chaleur (7) et qui est configuré pour diriger l'air humide généré dans l'étape de séchage sur le premier échangeur de chaleur (4).

7. Un lave-vaisselle (1) comme dans l'une quelconque des déclarations ci-dessus, **caractérisé par** le premier échangeur de chaleur (4) qui est revêtu d'un matériau non conducteur.
